# EUROPÄISCHE PATENTSCHRIFT

(11) **EP 4 012 105 B1**
(45) Veröffentlichungstag und Bekanntmachung des Hinweises auf die Patenterteilung: **11.10.2023**
(21) Anmeldenummer: 21213302.9
(22) Anmeldetag: 09.12.2021
(51) Int. Cl.: E02D 17/13

(54) **VERFAHREN ZUR MONTAGE EINES FRÄSRADS EINER SCHLITZWANDFRÄSE**
METHOD FOR MOUNTING A CUTTING WHEEL OF A TRENCH WALL CUTTER
PROCÉDÉ DE MONTAGE D'UNE ROUE DE FRAISAGE D'UN ENGIN DE CREUSEMENT

(30) Priorität: 11.12.2020 DE 102020133211
(43) Veröffentlichungstag der Anmeldung: 15.06.2022
(73) Patentinhaber: Liebherr-Werk Nenzing GmbH, 6710 Nenzing (AT)
(72) Erfinder: Geiger, Luis, 6700 Bludenz (AT)
(74) Vertreter: Laufhütte, Dieter

(56) Entgegenhaltungen:
- EP-A1- 2 597 205
- DE-U1-202019 102 438

## Beschreibung

Die vorliegende Erfindung betrifft ein Verfahren zur Montage eines Fräsrads an einem Fräsradgetriebe einer Schlitzwandfräse.

Schlitzwandfräsen werden zum Herstellen von Bodenschlitzen für die Konstruktion von Schlitzwänden eingesetzt und existieren in verschiedensten Ausführungen und Größen. Üblicherweise sind Schlitzwandfräsen an mobilen Trägergeräten wie Fahrzeugkranen oder Seilbaggern montiert.

Eine Kernkomponente derartiger Schlitzwandfräsen sind die Fräsräder, welche im unteren Bereich eines Gehäuses der Schlitzwandfräse auf rotatorisch antreibbaren Fräsradgetrieben gelagert sind. Die Fräsräder sind einem hohen Verschleiß ausgesetzt und müssen entsprechend oft ausgetauscht und/oder gewartet werden. Die Montage und Demontage der Fräsräder an den Fräsradgetrieben ist durch deren hohes Gewicht und die schlechte Zugänglichkeit der Befestigungsmittel mitunter sehr schwierig, erfordert aber gleichzeitig eine hohe Präzision. Aus diesem Grund kann sich dieser Vorgang sehr zeitintensiv und mühsam gestalten.

Bislang werden bei aus dem Stand der Technik bekannten Schlitzwandfräsen die Fräsräder ohne spezielle Hilfsmittel montiert. Die Ausrichtung der Fräsräder zu den Fräsradgetrieben wird dabei typischerweise von Hand bewerkstelligt. Unter Zuhilfenahme von Werkzeugen wie z.B. Brecheisen werden die Fräsräder meist so lange manipuliert, bis alle Anschlusspunkte bzw. Befestigungsmittel an Fräsrad und Fräsradgetriebe fluchten. Das Aufschieben des Fräsrads auf das Fräsradgetriebe erfolgt durch die endgültige Schraubverbindung.

Fräsanordnungen für Schlitzwandfräsen sind bereits aus der EP 2 597 205 A1 und der DE 20 2019 102 438 U1 bekannt.

Aufgabe der vorliegenden Erfindung ist es daher, die Montage und Demontage der Fräsräder solcher Schlitzwandfräsen zu vereinfachen und zu beschleunigen. Insbesondere soll eine einfache und präzise Ausrichtung der Fräsräder ermöglicht und gleichzeitig empfindliche Komponenten vor Beschädigungen geschützt werden.

Erfindungsgemäß wird diese Aufgabe durch ein Verfahren mit den Merkmalen des Anspruchs 1 gelöst. Demnach wird ein Verfahren zur Montage eines Fräsrads an einem Fräsradgetriebe einer Schlitzwandfräse vorgeschlagen, wobei das Fräsradgetriebe und das Fräsrad jeweils Befestigungsmittel zur Befestigung des Fräsrads am Fräsradgetriebe aufweisen und wobei mindestens zwei Abstandselemente an dem Fräsradgetriebe angeordnet sind.

Das erfindungsgemäße Verfahren umfasst die folgenden Schritte:
- Heranführen des Fräsrads an das Fräsradgetriebe, beispielsweise mittels eines Hebezeugs,
- Grobausrichten des Fräsrads relativ zum Fräsradgetriebe, sodass die Befestigungsmittel von Fräsrad und Fräsradgetriebe einander gegenüberliegen, ohne sich dabei zu berühren,
- Verbinden von je einem Zentrierelement mit den Abstandselementen,
- Feinausrichten des Fräsrads relativ zu den Abstandselementen mittels der Zentrierelemente, wobei sich die Befestigungsmittel immer noch nicht berühren, und
- Verschieben des Fräsrads relativ zu den Abstandselementen mittels der Zentrierelemente, sodass die Befestigungsmittel miteinander in Eingriff kommen.

Die erfindungsgemäße Idee ist es also, die Feinausrichtung des Fräsrads relativ zum Fräsradgetriebe sowie das finale Aufschieben des Fräsrads auf das Fräsradgetriebe, welches das Herstellen der Verbindung bewirkt bzw. ermöglicht, über eigens vorgesehene Zentrierelemente vorzunehmen. Diese wirken mit den Abstandselementen am Fräsradgetriebe zusammen, welche die Feinausrichtung ermöglichen, ohne dass sich die Befestigungsmittel berühren.

Die Abstandselemente dienen insbesondere als Abstandhalter, bis die richtige Ausrichtung des Fräsrades gefunden ist, und schützen so die Befestigungsmittel vor Beschädigung. Gleichzeitig stellen die Abstandselemente die Referenzpunkte für das Feinausrichten des Fräsrads sowie die Ankerpunkte für das Aufschieben des Fräsrads auf das Fräsradgetriebe dar. Beide Bewegungen erfolgen unter Verwendung der Zentrierelemente, welche somit eine Doppelfunktion innehaben. Das Feinausrichten des Fräsrads erfolgt dabei insbesondere durch Rotation des Fräsrads um dessen Mittelachse. Darüber hinaus können die Zentrierelemente als dritte Funktion ein Abrutschen des Fräsrads vom Fräsradgetriebe verhindern.

Bei den Befestigungsmitteln kann es sich um Stifte / Bolzen und zugehörige Bohrungen handeln. Wenn vorliegend also davon die Rede ist, dass diese sich nicht berühren (z.B. während der Grob- oder Feinausrichtung), ist insbesondere damit gemeint, dass von der Seite gesehen ein gewisser Abstand zwischen den Befestigungsmitteln besteht und z.B. die Stifte nicht in die Bohrungen eingefahren sind.

Vorteilhafte Ausführungsformen der Erfindung ergeben sich aus den Unteransprüchen und der nachfolgenden Beschreibung.

Beim oder vor dem Grobausrichten kann das Fräsrad bereits auf das Fräsradgetriebe bzw. auf eine Getriebenabe des Fräsradgetriebes aufgeschoben werden, sodass das Fräsrad beim Feinausrichten und ggf. bereits beim Grobausrichten auf dem Fräsradgetriebe bzw. der Getriebenabe aufliegt. Das Grobausrichten und/oder Feinausrichten erfolgt dann durch Rotation des Fräsrads. So kann bereits beim Heranführen des Fräsrads letzteres auf das Fräsradgetriebe aufgeschoben werden, wobei die Grobausrichtung durch anschließende Rotation relativ zum Fräsradgetriebe erfolgt, um die Befestigungsmittel so zu platzieren, dass sie sich gegenüberliegen. Da dieser Schritt insbesondere ohne Hilfsmittel für die Ausrichtung erfolgt, ist anschließend eine Feinausrichtung notwendig, sodass die Befestigungsmittel präzise ausgerichtet sind bzw. miteinander fluchten. Ebenfalls ist es aber denkbar, dass das Fräsrad bereits beim Heranführen in die richtige Position rotiert wird, sodass das Aufschieben des Fräsrads auf die Getriebenabe mit dem Schritt des Grobausrichtens erfolgt.

In einer möglichen Ausführungsform ist vorgesehen, dass die Abstandselemente und/oder die am Fräsradgetriebe angeordneten Befestigungsmittel senkrecht von der dem Fräsrad zugewandten Außenseite des Fräsradgetriebes abstehen und vorzugsweise auf Umfang verteilt sind. Bei der Außenseite des Fräsradgetriebes kann es sich um den Getriebedeckel handeln. Dieser kann abnehmbar oder öffenbar sein, muss es aber nicht.

In einer weiteren möglichen Ausführungsform ist vorgesehen, dass die Abstandselemente beim Verschieben bzw. Aufschieben des Fräsrads früher mit dem Fräsrad in Kontakt kommen als die Befestigungsmittel, wobei die Abstandselemente vorzugsweise eine größere Länge aufweisen als die am Fräsradgetriebe angeordneten Befestigungsmittel. Die Abstandselemente fungieren somit als Abstandhalter. Sie kommen als erstes mit dem Fräsrad in Kontakt und vermitteln ferner im Zusammenwirken mit den Zentrierelementen eine Feinausrichtung des Fräsrads. Da die Befestigungsmittel des Fräsradgetriebes nicht in Eingriff stehen, insbesondere weil sie kürzer sind als die Abstandselemente, sind sie vor Beschädigung geschützt. Erst wenn das Fräsrad vollständig korrekt positioniert ist, kann es weiter auf das Fräsradgetriebe aufgeschoben werden, sodass die Befestigungsmittel von Fräsrad und Fräsradgetriebe einander kontaktieren oder ineinander einfahren.

In einer weiteren möglichen Ausführungsform ist vorgesehen, dass die am Fräsradgetriebe angeordneten Befestigungsmittel Bolzen bzw. Stifte, insbesondere Gewindestifte, und die am Fräsrad angeordneten Befestigungsmittel Bohrungen sind, wobei beim Verschieben des Fräsrads relativ zu den Abstandselementen bzw. beim Aufschieben des Fräsrads auf das Fräsradgetriebe am Ende des Montagevorgangs die Stifte durch die Bohrungen geschoben werden ("in Eingriff kommen"). Vorzugsweise werden die vollständig in bzw. durch die Bohrungen geschobenen Stifte mittels Sicherungselementen, insbesondere Muttern, gesichert. Dadurch ist das Fräsrad fest am Fräsradgetriebe befestigt und der Montagevorgang abgeschlossen.

In einer weiteren möglichen Ausführungsform ist vorgesehen, dass die Zentrierelemente von der dem Fräsradgetriebe abgewandten Seite des Fräsrads aus mit den Abstandselementen verbunden werden. Die Verbindung der Zentrierelemente kann dabei unmittelbar, also direkt mit den Abstandselementen, oder mittelbar, beispielsweise über ein Verbindungselement, erfolgen. Vorzugsweise sind Aussparungen vorgesehen, durch welche die Zentrierelemente mit den Abstandselementen verbunden werden können. Die Verbindung der Zentrierelemente mit den Abstandselementen (bzw. mit den Verbindungselementen) erfolgt insbesondere über eine Schraubverbindung. Hierzu können die Zentrierelemente und/oder die Abstandselemente entsprechende Gewindebohrungen und/oder Gewindestücke aufweisen.

Nach erfolgter Montage des Fräsrads werden die Zentrierelemente vorzugsweise von den Abstandselementen entfernt. Allerdings ist es ebenfalls denkbar, dass sie an den Abstandselementen verbleiben oder an speziellen Haltemitteln der Schlitzwandfräse gelagert werden. Die Zentrierelemente sind insbesondere tragbar.

In einer weiteren möglichen Ausführungsform ist vorgesehen, dass pro Abstandselement eine Aussparung an einem Befestigungsflansch des Fräsrads ausgebildet ist. Der Befestigungsflansch kann ringförmig an bzw. in einer Nabe des Fräsrads ausgebildet sein und senkrecht zur Stirnseite bzw. Außenseite des Fräsradgetriebes verlaufen. Beim Verschieben des Fräsrads relativ zu den Abstandselementen fahren letztere in die Aussparungen ein. Zuvor wurden diese durch die Feinausrichtung so zueinander ausgerichtet, dass sie miteinander fluchten.

Die Abstandselemente verbleiben vorzugsweise nach erfolgter Montage des Fräsrads am Fräsradgetriebe. Sie können ebenso wie die Befestigungsmittel mittels Sicherungselementen bzw. Muttern sicherbar sein. Ebenfalls ist vorstellbar, dass nach erfolgter Montage Abdeckelemente an den Abstandselementen angebracht werden, beispielsweise um Gewindebohrungen der Abstandselemente zu verschließen und damit vor dem Eindringen von Schmutz bzw. Abraum zu schützen.

In einer weiteren möglichen Ausführungsform ist vorgesehen, dass die Zentrierelemente durch die Aussparungen hindurch mit den Abstandselementen verbunden werden, wobei die Zentrierelemente zur Feinausrichtung und/oder zum Verschieben des Fräsrads in Richtung des Fräsradgetriebes bewegt werden. Vorzugsweise werden die Zentrierelemente und die Abstandselemente über Gewindestifte miteinander verbunden, welche durch die Aussparungen hindurch verlaufen. Die Zentrierelemente werden dann auf die Gewindestifte geschraubt, welche vorzugsweise rotationsstarr mit den Abstandselementen verbunden, insbesondere in diese eingeschraubt, sind.

Durch fortgesetztes Aufschrauben der Zentrierelemente auf die Gewindestifte bewegen erstere sich in Richtung der Abstandselemente bzw. des Fräsradgetriebes. Dabei kann ab einer gewissen Distanz zuerst die Feinausrichtung des Fräsrads erfolgen, welche durch ein Zusammenwirken mit dem Fräsrad bzw. Kontaktieren des Fräsrads (insbesondere an den Kanten der Aussparungen) bewirkt wird. Das Verschieben des Fräsrads relativ zu den Abstandselementen, welches insbesondere einem weiteren Aufschieben des Fräsrads auf das Fräsradgetriebe bzw. die Getriebenabe entspricht, wird vorzugsweise nach dem Feinausrichten durch fortgesetztes Aufschrauben der Zentrierelemente auf die Gewindestifte bewirkt. Im einfachsten Fall drücken die Zentrierelemente dabei gegen das Fräsrad und schieben dieses dadurch in Richtung Fräsradgetriebe.

In einer weiteren möglichen Ausführungsform ist vorgesehen, dass die Zentrierelemente einen konischen Abschnitt aufweisen, welcher vorzugsweise beim Bewegen der Zentrierelemente in Richtung der Abstandselemente bzw. des Fräsradgetriebes mit der jeweiligen Aussparung zusammenwirkt und das Fräsrad derart feinausrichtet, dass die Abstandselemente mit den zugeordneten Aussparungen fluchten.

Das der Aussparung zugewandte Ende des konischen Abschnitts, welches gleichzeitig ein Ende des Zentrierelements darstellen kann, weist dabei einen geringeren Außendurchmesser auf als der Innendurchmesser der Aussparung. Dadurch fährt dieses Ende des konischen Abschnitts beim Bewegen des Zentrierelements in die Aussparung ein. Auch wenn vor der Feinausrichtung das Zentrierelement und die Aussparung nicht perfekt, insbesondere nicht kollinear, zueinander ausgerichtet sind, wird durch die konische Form das "Einfädeln" erleichtert.

Beim weiteren Bewegen der Zentrierelemente in Richtung Fräsradgetriebe drückt die abgeschrägte Form des Zentrierelements gegen die Kante der Aussparung, sodass sich das Fräsrad um dessen Rotationsachse dreht (auch eine leichte Verschiebung der Rotationsachse ist hier möglich) und automatisch eine präzise bzw. kollineare Ausrichtung des Zentrierelements und somit auch des Abstandselements zur Aussparung erreicht wird. Für eine optimale Feinausrichtung kann der konische Abschnitt einen maximalen Durchmesser aufweisen, der gerade dem Innendurchmesser der Aussparung entspricht (bzw. geringfügig kleiner, damit das Zentrierelement nicht blockiert bzw. verkantet).

In einer weiteren möglichen Ausführungsform ist vorgesehen, dass die Zentrierelemente im Bereich des konischen Abschnitts einen vorzugsweise umlaufenden ersten Anschlag aufweisen, welcher nach der Feinausrichtung am Fräsrad anliegt. Der erste Anschlag schließt sich vorzugsweise an das Ende des konischen Abschnitts mit maximalem Durchmesser an. Schlägt der erste Anschlag am Fräsrad bzw. am Befestigungsflansch an, ist die Feinausrichtung abgeschlossen. Bei einem fortgesetzten Bewegen des Zentrierelements in Richtung Fräsradgetriebe (insbesondere durch weiteres Verschrauben) drückt der Anschlag das Fräsrad ebenfalls in Richtung Fräsradgetriebe, wobei die Aussparung sich relativ zu dem zugeordneten Abstandselement bewegt und letzteres dadurch in die Aussparungen einfährt. Der erste Anschlag kann ein einstückig mit dem Zentrierelement ausgebildeter Bereich mit einem Durchmesser sein, welcher größer als der Innendurchmesser der Aussparung ist.

Generell kann das Zentrierelement eine im Wesentlichen zylindrische Form aufweisen, wobei eines der Enden konisch geformt sein kann und den konischen Abschnitt für die Feinausrichtung bildet. Das Zentrierelement kann einen oder mehrere Griffe oder Griffelemente aufweisen, welche das Verschrauben erleichtern. Ebenfalls können Aufnahmen für Werkzeuge vorgesehen sein, mittels welchem die Zentrierelemente einfacher schraubbar sind. Die Zentrierelemente sind insbesondere rotationssymmetrisch. Vorzugsweise unterscheiden sich aber die axialen Endbereiche der Zentrierelemente voneinander.

In einer weiteren möglichen Ausführungsform ist vorgesehen, dass die ersten Anschläge beim fortgesetzten Bewegen, insbesondere Schrauben, der Zentrierelemente in Richtung Fräsradgetriebe das Fräsrad auch in Richtung Fräsradgetriebe drücken, sodass die Abstandselemente in die jeweiligen Aussparungen einfahren. Optimalerweise wird das Fräsrad dabei mit allen Zentrierelementen gleichzeitig verschoben, wobei hierfür allerdings mehrere Personen nötig sind. Alternativ kann jedes Zentrierelement auch nacheinander jeweils nur um eine kurze Strecke verschoben werden, sodass es nicht zu einem Verkanten des Fräsrads bzw. der Abstandselemente und/oder der Befestigungsmittel kommt.

In einer weiteren möglichen Ausführungsform ist vorgesehen, dass die Zentrierelemente über Gewindestifte mit den Abstandselementen verbunden und durch Verschrauben in Richtung der Abstandselemente bzw. des Fräsradgetriebes bewegbar sind und eine durchgängige Gewindebohrung zur Aufnahme der Gewindestifte aufweisen. Das Zentrierelement kann also vorzugsweise von beiden Seiten her auf den Gewindestift aufgeschraubt werden, wobei eines der Enden insbesondere den konischen Abschnitt aufweist bzw. darstellt.

Vorzugsweise besitzen die Zentrierelemente an ihren den konischen Abschnitten abgewandten Enden jeweils einen zweiten Anschlag. Nach dem Verschieben des Fräsrads um eine erste Strecke relativ zu den Abstandselementen in Richtung Fräsradgetriebe mittels der Zentrierelemente werden diese von den Gewindestiften abgeschraubt, umgedreht und mit dem anderen Ende wieder auf die Gewindestifte geschraubt, bis die zweiten Anschläge an das Fräsrad bzw. den Befestigungsflansch stoßen. Bei einem fortgesetzten Verschrauben der Zentrierelemente wird das Fräsrad dann weiter in Richtung Fräsradgetriebe verschoben.

Der erste Anschlag dient also dem ersten Verschieben des Fräsrads um eine erste Strecke unmittelbar im Anschluss an die Feinausrichtung. Nach dem Umdrehen des Zentrierelements wird das Fräsrad dann um die verbleibende Strecke auf das Fräsradgetriebe aufgeschoben, bis die jeweiligen Befestigungsmittel vollständig miteinander in Eingriff stehen.

In einer weiteren möglichen Ausführungsform ist vorgesehen, dass die Zentrierelemente an ihren den konischen Abschnitten abgewandten Enden in die Gewindebohrungen mündende Ausnehmungen aufweisen, wobei nach dem erneuten Aufschrauben auf die Gewindestifte und fortgesetzten Verschieben des Fräsrads in Richtung des Fräsradgetriebes die Abstandselemente in die Ausnehmungen der Zentrierelemente einfahren, bis die Befestigungsmittel von Fräsrad und Fräsradgetriebe vollständig miteinander in Eingriff stehen.

In einer weiteren möglichen Ausführungsform sind mindestens zwei Vorzentrierelemente vorgesehen, die an der dem Fräsradgetriebe zugewandten Seite des Fräsrads angeordnet sind und jeweils eine abgeschrägte Fläche aufweisen. Das Fräsrad wird so beim Heranführen an das Fräsradgetriebe zuerst über die Vorzentrierelemente auf das Fräsradgetriebe geschoben und über die abgeschrägten Flächen der Vorzentrierelemente relativ zum Fräsradgetriebe vorzentriert, sodass die Rotationsachsen von Fräsrad und Fräsradgetriebe im Wesentlichen kollinear sind.

Anschließend erfolgt die Grobausrichtung und die Feinausrichtung dann jeweils durch eine Rotation des Fräsrads relativ zum Fräsradgetriebe. Dabei kann sich jedoch auch die Rotationsachse des Fräsrads geringfügig verschieben, sodass diese zumindest nach der Feinausrichtung gänzlich kollinear mit der Rotationsachse des Fräsradgetriebes ist.

Die Vorzentrierelemente verlängern sozusagen die Auflagefläche des Fräsrads auf dem Fräsradgetriebe bzw. auf der Getriebenabe. Beim Heranführen kontaktiert das Fräsrad das Fräsradgetriebe also zuerst über die Vorzentrierelemente. Die abgeschrägten Flächen erleichtern das Aufschieben bzw. "Einfädeln" und sorgen für eine automatische Vorzentrierung. Die Vorzentrierelemente können als bogensegmentförmige Zentrierklötze ausgebildet und beispielsweise mittels Schrauben am Fräsrad befestigbar sein. Sie können nach erfolgter Montage entweder am Fräsrad verbleiben oder anschließend wieder abgebaut werden.

Vorzugsweise sind pro Fräsrad drei Abstandselemente und entsprechend drei Zentrierelemente vorgesehen. Vorzugsweise sind ebenfalls drei Vorzentrierelemente vorgesehen.

Grundsätzlich kann ein Set für eine Schlitzwandfräse zur Verfügung gestellt werden. Das Set umfasst mindestens zwei Zentrierelemente und mindestens zwei Abstandselemente, vorzugsweise drei Zentrierelemente und drei Abstandselemente. Zusätzlich kann das Set mindestens zwei, vorzugsweise drei, Gewindestifte zur Verbindung der Zentrierelemente mit den Abstandselementen und/oder mindestens zwei, vorzugsweise drei, der oben beschriebenen Vorzentrierelemente umfassen. Dabei ergeben sich offensichtlich dieselben Vorteile und Eigenschaften wie für das erfindungsgemäße Verfahren, weshalb an dieser Stelle auf eine wiederholende Beschreibung verzichtet wird.

Das Set kann bei herkömmlichen Schlitzwandfräsen für die Fräsradmontage zum Einsatz kommen. Beispielsweise können die Abstandselemente ein Gewinde aufweisen, welches in bereits vorhandene Bohrungen an bekannten Fräsradgetrieben bzw.

Getriebedeckeln einschraubbar ist. Bei den den Abstandselementen zugeordneten Aussparungen kann es sich um bereits vorhandene Bohrungen für Befestigungsstifte der Fräsradgetriebe handeln. Die oben beschriebenen Vorzentrierelemente können, falls sie bei gattungsgemäßen Fräsrädern ohne eigens für die Vorzentrierelemente vorgesehenen Bohrungen zum Einsatz kommen, aufsteckbar oder anderweitig reversibel mit dem Fräsrad verbindbar sein. Die Zentrierelemente sind insbesondere separate Teile und auf die Form der Abstandselemente abgestimmt. In diesem Fall kann das Verfahren mittels des erfindungsgemäßen Sets auch bei gattungsgemäßen Schlitzwandfräsen durchgeführt werden. Hier muss also keine Modifikation der Fräsräder und/oder Fräsradgetriebe erfolgen.

Eine Schlitzwandfräse kann zwei oder vier Fräsräder aufweisen, welche allesamt mittels des erfindungsgemäßen Verfahrens an den jeweiligen Fräsradgetrieben montierbar sind. Die Zentrierelemente und ggf. die Gewindestifte können dabei für alle vier Fräsräder verwendet werden, sodass hier nicht die doppelte bzw. vierfache Anzahl vorgehalten werden muss. Insbesondere erfolgt der Anbau der Fräsräder sowieso sequenziell. Die Abstandselemente verbleiben jedoch bevorzugt an den jeweiligen Fräsradgetrieben, sodass eine entsprechende Anzahl pro Fräsrad vorgesehen sein muss.

Weitere Merkmale, Einzelheiten und Vorteile der Erfindung ergeben sich aus den nachfolgend anhand der Figuren erläuterten Ausführungsbeispielen. Es zeigen:
- Figur 1:: ein Trägergerät mit einer Schlitzwandfräse in einer Seitenansicht;
- Figur 2:: eine perspektivische Ansicht eines Ausführungsbeispiels der erfindungsgemäßen Schlitzwandfräse im Bereich der Fräsräder, wobei eines der Fräsräder in einer Explosionsdarstellung gezeigt ist;
- Figur 3:: ein Zentrierelement, ein Abstandselement und einen Gewindestift gemäß einem erfindungsgemäßen Ausführungsbeispiel, jeweils in einer seitlichen Schnittansicht;
- Figuren 4-9:: schematische Schnittansichten verschiedener Schritte des erfindungsgemäßen Verfahrens gemäß einem Ausführungsbeispiel, wobei die in der Figur 3 gezeigten Teile verwendet werden; und
- Figur 10:: eine perspektivische Ansicht eines Ausführungsbeispiels der erfindungsgemäßen Schlitzwandfräse im Bereich der Fräsradgetriebe, wobei im Vergleich zur Figur 2 weitere Details gezeigt sind;

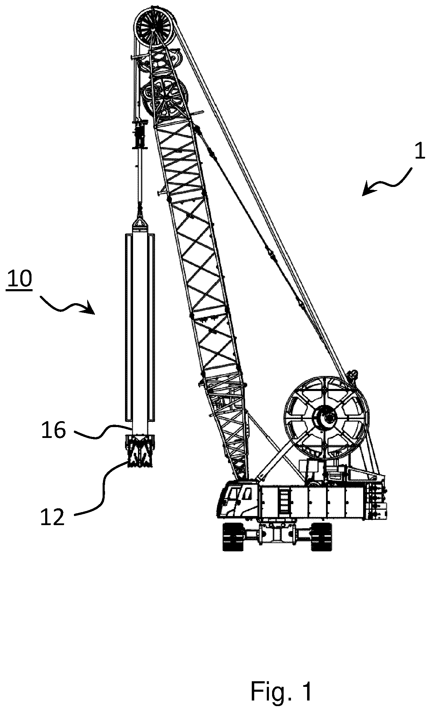

Die Figur 1 zeigt ein Trägergerät 1 mit einer an einem Ausleger des Trägergeräts 1 aufgehängten Schlitzwandfräse 10 in einer Seitenansicht. Die Schlitzwandfräse 10 umfasst ein Gehäuse 16, an dessen unterem Ende sich mehrere Fräsräder 12 befinden, welche auf rotatorisch antreibbaren Fräsradgetrieben 14 montiert sind. Typischerweise sind insgesamt vier Fräsräder 12 vorhanden, wobei auch Ausführungsformen mit zwei oder mehr als vier Fräsrädern 12 denkbar sind.

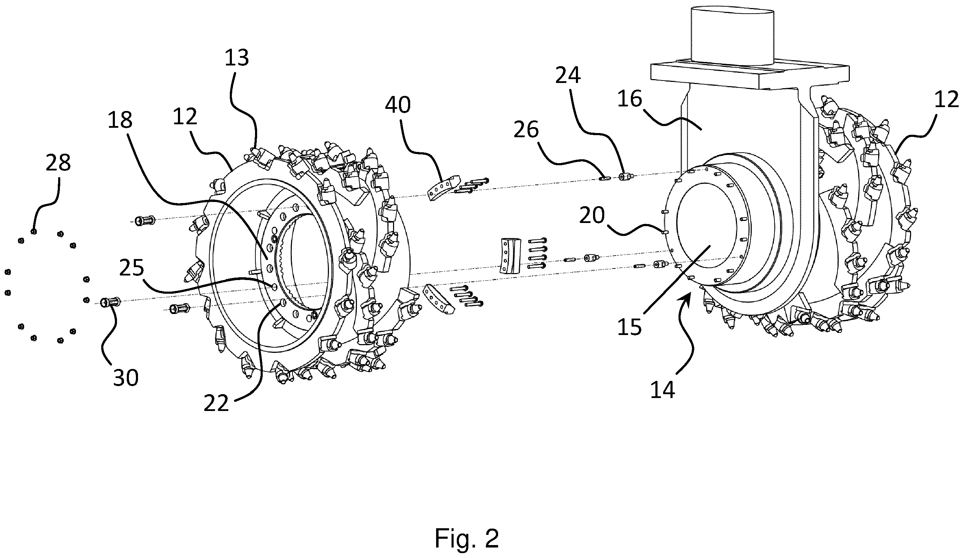

Die Figur 2 zeigt einen Ausschnitt eines Ausführungsbeispiels der erfindungsgemäßen Schlitzwandfräse 10 im Bereich der Fräsräder 12, wobei hier nur zwei Fräsräder 12 gezeigt sind. Eines der beiden Fräsräder 12 ist in einer Explosionsansicht gezeigt. Dadurch ist der Blick auf das Fräsradgetriebe 14 freigelegt, welches auch als Fräsradnabe bzw. Getriebenabe bezeichnet werden kann, auf welche das Fräsrad 12 zur Montage aufschiebbar ist. An der Stirnseite weist das Fräsradgetriebe 14 einen Getriebedeckel 15 auf, welcher eine Vielzahl von auf Umfang verteilten Befestigungsmitteln 20 zur Befestigung des Fräsrads 12 aufweist, die senkrecht vom Getriebedeckel 15 abstehen.

Das Fräsrad 12 weist am Außenumfang eine Vielzahl von Fräszähnen 13 und innen einen umlaufenden Befestigungsflansch 18 auf. In Letzterem sind eine Vielzahl von Bohrungen 22 vorgesehen, die passend zu den Befestigungsmitteln 20 des Fräsradgetriebes 14 ausgebildet und angeordnet sind und die Befestigungsmittel 22 des Fräsrads 12 bilden. Zur Montage wird das Fräsrad 12 auf das Fräsradgetriebe 14 aufgeschoben und die Befestigungsmittel 20 des Fräsradgetriebes 14 durch die zugeordneten Bohrungen 22 geschoben. Anschließend werden die Befestigungsmittel 20, die insbesondere als Gewindestifte oder als Bolzen mit endseitigen Gewindeabschnitten ausgebildet sind, durch Sicherungselemente bzw. Muttern 28 gesichert.

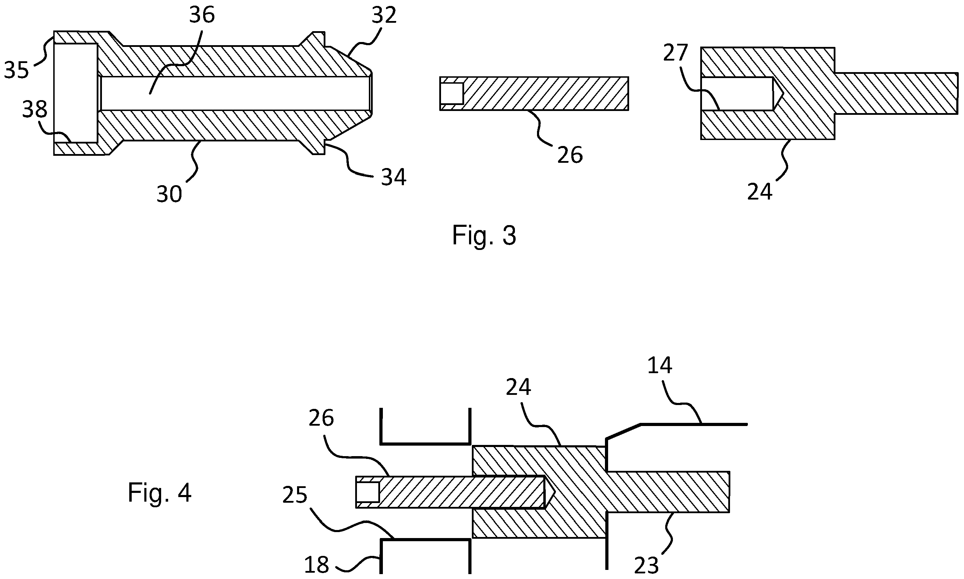

Neben den Befestigungsmitteln 20 sind am Getriebedeckel 15 drei Abstandselemente 24 angeordnet, welche jeweils über einen Gewindeabschnitt in entsprechende Bohrungen 23 des Getriebedeckels 15 eingeschraubt sind (vgl. Figur 4). Der vom Getriebedeckel 15 abstehende Teil der Abstandselemente 24 ist bolzen- bzw. zylinderförmig und bildet einen Distanzbolzen, welcher eine größere Länge aufweist als die Befestigungsmittel 20.

Die Abstandselemente 24 weisen an den vom Getriebedeckel 15 abstehenden Enden eine zentrale Gewindebohrung 27 auf (vgl. Figur 3), in die Gewindestifte 26 eingeschraubt sind. Drei der Bohrungen des Befestigungsflansches 18 des Fräsrads bilden Aussparungen 25, durch die die Abstandselemente 24 bei der Montage des Fräsrads 12 geschoben werden.

Zur Feinausrichtung des Fräsrads 12 bevor die Befestigungsmittel 20, 22 miteinander in Eingriff kommen, sowie zum kontrollierten Aufschieben des Fräsrads 12 auf das Fräsradgetriebe 14, sind drei Zentrierelemente 30 vorgesehen, deren Funktion weiter unten beschrieben wird und die vom Fräsrad 12 bzw. von der Schlitzwandfräse 10 separate Teile bilden.

Das Fräsrad 12 weist ferner an der dem Fräsradgetriebe 14 zugewandten Seite drei über Schrauben befestigte und als Zentrierblöcke ausgebildete Vorzentrierelemente 40 auf. Die Zentrierblöcke 40 folgen an ihrer zur Rotationsachse des Fräsrads 12 weisenden Innenseite dem Innenumfang des Fräsrads 12 und bilden somit verlängerte Auflageflächen des Fräsrads 12 auf dem Fräsradgetriebe 14, welche bei der Montage als erstes mit der Getriebenabe in Kontakt kommen. Die Zentrierblöcke 40 sind an den Innenseiten in Richtung Fräsradgetriebe 14 abgeschrägt und erleichtern so das Aufschieben bzw. "Einfädeln" auf das Fräsradgetriebe 14. Ferner sorgen sie dadurch beim Aufschieben für eine Vorzentrierung des Fräsrads 12 relativ zum Fräsradgetriebe 14, sodass anschließend der Innendurchmesser des Fräsrads 12 zum Außendurchmesser der Getriebenabe bzw. des Fräsradgetriebes 14 fluchtet bzw. die jeweiligen Rotationsachsen im Wesentlichen kollinear sind.

Die Figur 3 zeigt Ausführungsbeispiele des Zentrierelements 30, des Gewindestifts 26 und des Abstandselements 24 der erfindungsgemäßen Schlitzwandfräse 10, wobei seitliche Schnittansichten entlang ihrer Längsachsen gezeigt sind. Die Gewindeabschnitte der drei Teile sind hierbei nicht extra eingezeichnet.

Das Abstandselement 24 wurde bereits weiter oben beschrieben. Der Gewindestift 26 weist eine größere Länge auf als die Gewindebohrung 27 des Abstandselements 24 und besitzt am dem Abstandselement 24 abgewandten Ende eine Ausnehmung für ein Werkzeug, wodurch es einfach und fest einschraubbar ist.

Das Zentrierelement 30 weist eine entlang der Längsachse verlaufende, durchgängige Gewindebohrung 36 auf (bzw. eine Bohrung 36, die zumindest an den beiden Endabschnitten jeweils Innengewinde aufweist). Alternativ könnten aber auch zwei Sacklochgewindebohrungen von beiden Enden her vorgesehen sein.

Das dem Abstandselement 24 zugewandte Ende des Zentrierelements 30 ist konisch geformt und verjüngt sich zum Ende hin. Dieser konische Abschnitt 32 dient dem Feinausrichten des Fräsrads 12 vor der endgültigen Verbindung. An den konischen Abschnitt 32 schließt sich ein umlaufender erster Anschlag 34 an, dessen Anschlagfläche senkrecht auf die Längsachse des Zentrierelements 30 steht. Das Zentrierelement 30, welches auch als Zentrierkonus bezeichnet werden kann, ist in diesem Ausführungsbeispiel einstückig geformt, kann aber auch aus mehreren zusammengesetzten Teilen bestehen.

Anhand der Figuren 4-9 wird im Folgenden ein Ausführungsbeispiel des erfindungsgemäßen Verfahrens zur Montage des Fräsrads 12 am Fräsradgetriebe 14 beschrieben.

Im ersten Schritt wird das Fräsrad 12 grob zur Getriebenabe bzw. zum Fräsradgetriebe 14 vorpositioniert. Durch die Zentrierklötze 40 auf der Fräsradrückseite wird sichergestellt, dass der Innendurchmesser des Fräsrads 12 zur Getriebenabe 14 in einer Flucht steht. Dadurch ist es möglich, das Fräsrad 12 soweit aufzuschieben, bis die an der Stirnseite des Fräsradgetriebes 14 angeordneten Abstandselemente 24 am Befestigungsflansch 18 des Fräsrads 12 anstehen, sofern sie nicht bereits mit den Aussparungen 25 im Flanschring 18 fluchten.

Da die Distanzbolzen der Abstandselemente 24 (also die vom Getriebedeckel 15 abstehenden Teile) länger sind als die Befestigungselemente 20, schlägt das Fräsrad 12 beim Aufschieben zunächst an diesen an und kann nicht in Kontakt mit den Befestigungsmitteln 20 kommen. Somit schützen die Abstandselemente 24 die Befestigungsmittel 20 vor Beschädigung. Die Abstandselemente 24 können optional Dämpfungselemente umfassen und/oder aus einem stoßfesten Material bestehen.

In diesem Zustand erfolgt die Grobausrichtung des Fräsrads 12 in Rotationsrichtung. Hierbei müssen die Abstandselemente 24 soweit mit den Aussparungen 25 im Befestigungsflansch 18 fluchten, dass die Gewindestifte 26 zum Aufziehen des Fräsrads in die Abstandselemente 24 eingesetzt werden können. Die Gewindestifte 26 verlaufen im eingeschraubten Zustand durch die Aussparungen 25 hindurch (vgl. Figur 4).

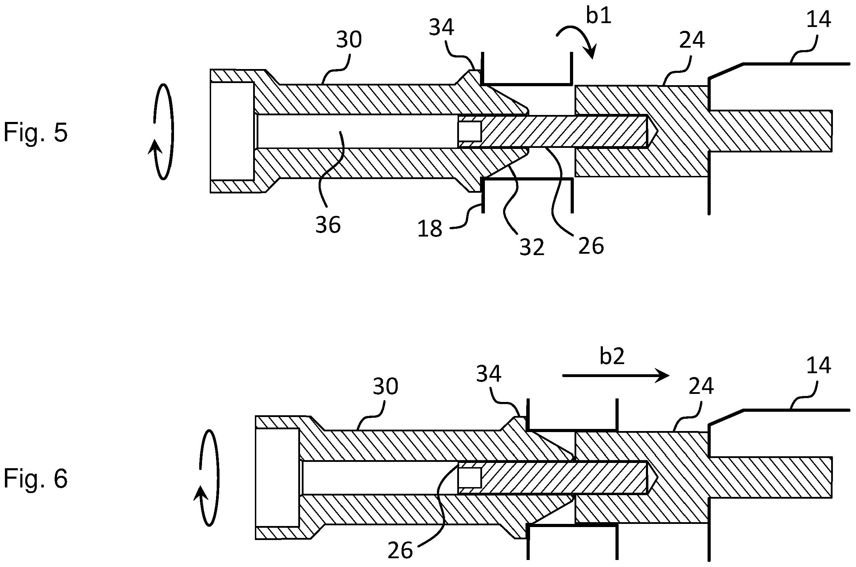

Ist dies geschehen, werden die Zentrierelemente 30 von der dem Fräsradgetriebe 14 abgewandten Seite aus auf die Gewindestifte 26 aufgeschraubt. Werden diese um eine gewisse Strecke durch die Schraubbewegung verschoben, stoßen die konischen Abschnitte 32 an die Kanten der Aussparungen 25 und bewirken automatisch die genaue Ausrichtung der Aussparungen 25 zu den Abstandselementen 24 und dadurch eine Feinausrichtung des Fräsrads 12 relativ zum Fräsradgetriebe 14. Diese Feinausrichtung kann eine Rotation (vgl. Pfeil b1 in der Figur 5) und/oder Verschiebung des Fräsrads 12 relativ zum Fräsradgetriebe 14 bewirken. Nach der Feinausrichtung fluchten die Befestigungsmittel 20 mit den zugehörigen Bohrungen 22.

Die Figur 5 zeigt die Situation direkt im Anschluss an die vollständig erfolgte Feinausrichtung des Fräsrads 12. Hier ist der konische Abschnitt 32 komplett in die Aussparung 25 eingedrungen und der erste Anschlag 34 des Zentrierelements 30 stößt an die dem Fräsradgetriebe 14 abgewandte Seite des Befestigungsflanschs 18. Noch befindet sich das Abstandselement 24 außerhalb der Aussparung 25.

Das Fräsrad 12 kann nun auf das Fräsradgetriebe 14 aufgeschoben werden, indem die Zentrierelemente 30 weiter gedreht bzw. auf die Gewindestifte 26 aufgeschraubt werden. Dabei schieben die Zentrierelemente 30 über die ersten Anschläge 34 den Befestigungsflansch 18 und somit das ganze Fräsrad 12 so lange in Richtung Fräsradgetriebe 14 (vgl. Pfeil b1 in der Figur 6), bis die Spitze des Zentrierelements 30 an die Stirnseite des Abstandselements 24 stößt (vgl. Figur 6). Hierbei sind die Abstandselemente 24 noch nicht vollständig in die Aussparungen 25 eingeschoben.

Nun werden die Zentrierelemente 30 umgedreht und vom anderen Ende her erneut auf die Gewindestifte 26 geschraubt. An den den konischen Abschnitten 32 abgewandten Enden weisen die Zentrierelemente 30 eine zentrale Ausnehmung 38 auf, deren Innendurchmesser größer ist als der Außendurchmesser der Abstandselemente 24. Die Stirnseiten dieser Enden bilden um die Ausnehmungen 38 kreisförmig umlaufende zweite Anschläge 35.

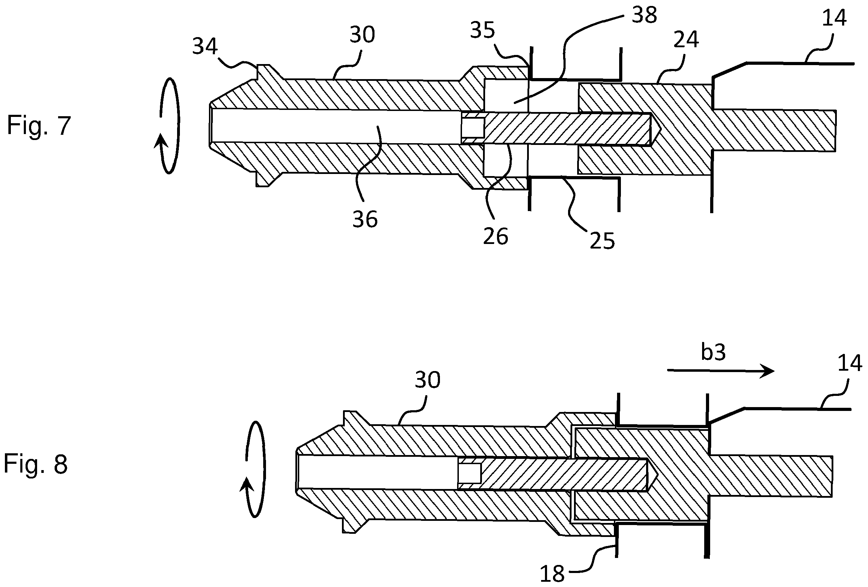

Die Zentrierelemente 30 werden nun mit den zweiten Anschlägen 35 voraus auf die Gewindestifte 26 geschraubt, bis die zweiten Anschläge 35 an den Befestigungsflansch 18 stoßen (vgl. Figur 7). Dies bietet zusätzlich den Vorteil eines lokalen Kraftschlusses zwischen Fräsrad 12 und Fräsradgetriebe 14, sodass hier kein Gegenhalt bzw. keine Sicherungsvorrichtung an der Schlitzwandfräse 10 selbst nötig ist. Es besteht keine Gefahr, dass die Schlitzwandfräse 10 während des Aufschiebevorgangs ausweicht oder das Fräsrad 12 vom Fräsradgetriebe 14 abrutscht.

Durch fortgesetztes Umdrehen bzw. Aufschrauben, drücken die Zentrierelemente 30 das Fräsrad 12 weiter in Richtung Fräsradgetriebe 14 und schieben das Fräsrad 12 vollständig auf dieses auf, bis der Befestigungsflansch 18 an den Getriebedeckel 15 anstößt (oder zu diesem zumindest eine minimale Entfernung einnimmt). Dabei fahren die Abstandselemente 24 in die Ausnehmungen 38 der Zentrierelemente 30 ein. Diese Endposition ist in der Figur 8 gezeigt. Durch gleichmäßiges Anziehen aller drei Zentrierelemente 30 wird das Aufschieben ohne Verkanten sichergestellt. Dabei fahren die Abstandselemente 24 vollständig in die Aussparungen 25 sowie die Befestigungsmittel 20 vollständig in die zugehörigen Bohrungen 22 ein.

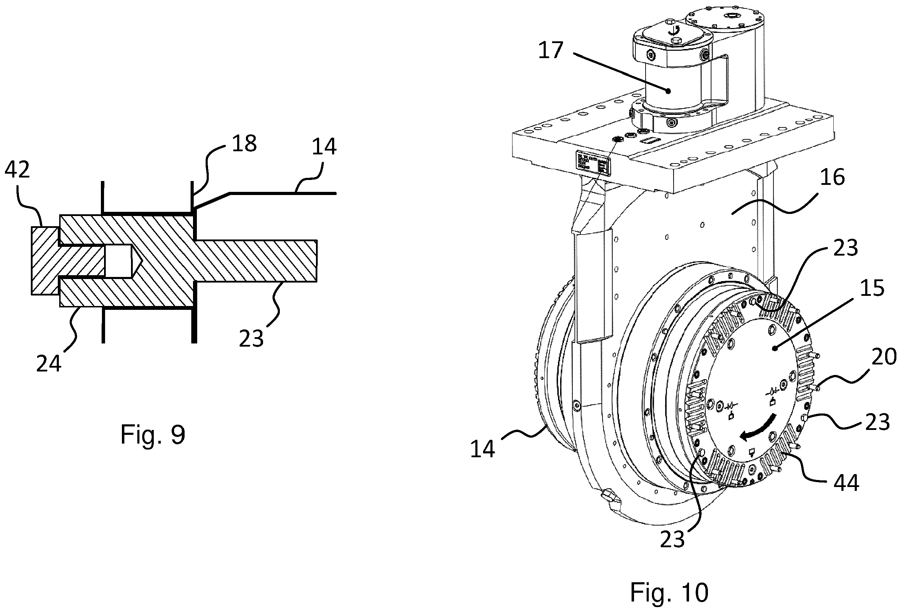

Anschließend können zur Befestigung des Fräsrads 12 auf dem Fräsradgetriebe 14 die Muttern 28 auf die durch die Bohrungen 22 ragenden Befestigungsmittel 20 bequem aufgesetzt und angezogen werden. Ist dies geschehen, werden die Zentrierelemente 30 und die zugehörigen Gewindestifte 26 entfernt. Die Abstandselemente 24 verbleiben im Fräsradgetriebe 14, wobei deren Gewindebohrungen 27 mit als Verschlussschrauben ausgebildeten Abdeckelementen 44 geschützt werden, wie dies in der Figur 9 gezeigt ist. Die Zentrierblöcke 40 können ebenfalls am Fräsrad 12 verbleiben oder aber nach der Montage abgebaut und z.B. für die Montage anderer Fräsräder 12 verwendet werden.

In der Figur 10 ist ein weiteres Ausführungsbeispiel der erfindungsgemäßen Schlitzwandfräse 10 im Bereich der Fräsradgetriebe 14 ohne Fräsräder 12 gezeigt, wobei hier weitere Details dargestellt sind. So ist z.B. eine Antriebseinheit 17 zu erkennen, welche die beiden gezeigten Fräsradgetriebe 14 antreibt. Hierbei kann es sich um einen Hydraulikmotor handeln. Ferner ist am Getriebedeckel 15 in den Bereichen der paarweise angeordneten Befestigungsmittel 20 eine Verzahnung 44 vorgesehen, welche mit einer entsprechenden Verzahnung am Fräsrad 12 bzw. am Befestigungsflansch 18 zusammenwirkt und einer effektiven Drehmomentübertragung vom Fräsradgetriebe 14 auf das Fräsrad 12 dient.

Ferner sind die Bohrungen 23, in die die Abstandselemente 24 einschraubbar sind, mit Verschlussschrauben verschlossen und die Abstandselemente 24 vom Fräsradgetriebe 14 entfernt. Alternativ können die Abstandselemente 24 fest am Getriebedeckel 15 angeordnet sein.

Prinzipiell könnten die Zentrierelemente 30 über eine andere Art von Bewegung, z.B. ein lineares Aufstecken auf die Gewindestifte 26 oder Abstandselements 24, die Feinausrichtung und/oder das Aufschieben des Fräsrads 12 bewirken. Durch ein Aufschrauben wird aber das Fräsrad 12 vorteilhafterweise gegen ein Abrutschen gesichert und es ist ein geringerer Kraftaufwand erforderlich. Die Bewegung kann zudem besser kontrolliert bzw. zwischen den drei Zentrierelementen 30 aufgeteilt werden.

### Bezugszeichenliste:

- 1: Trägergerät
- 10: Schlitzwandfräse
- 12: Fräsrad
- 13: Fräszahn
- 14: Fräsradgetriebe / Getriebenabe
- 15: Getriebedeckel
- 16: Gehäuse
- 17: Antriebseinheit
- 18: Befestigungsflansch
- 20: Befestigungsmittel (Stift)
- 22: Befestigungsmittel (Bohrung)
- 23: Bohrung
- 24: Abstandselement (Distanzbolzen)
- 25: Aussparung (Bohrung)
- 26: Gewindestift
- 27: Gewindebohrung
- 28: Sicherungselement (Mutter)
- 30: Zentrierelement (Zentrierkonus)
- 32: Konischer Abschnitt
- 34: Erster Anschlag
- 35: Zweiter Anschlag
- 36: Gewindebohrung
- 38: Ausnehmung
- 40: Vorzentrierelement (Zentrierblock)
- 42: Abdeckelement (Verschlussschraube)
- 44: Verzahnung
- b1: Bewegungsrichtung bei der Feinausrichtung
- b2: Bewegungsrichtung beim ersten Aufschieben mittels der Zentrierelemente
- b3: Bewegungsrichtung beim zweiten Aufschieben mittels der Zentrierelemente

## Patentansprüche

1. Verfahren zur Montage eines Fräsrads (12) an einem Fräsradgetriebe (14) einer Schlitzwandfräse (10), wobei das Fräsradgetriebe (14) und das Fräsrad (12) Befestigungsmittel (20, 22) zur Befestigung des Fräsrads (12) aufweisen und wobei mindestens zwei Abstandselemente (24) am Fräsradgetriebe (14) angeordnet sind, mit den Schritten:
- Heranführen des Fräsrads (12) an das Fräsradgetriebe (14),
- Grobausrichten des Fräsrads (12) relativ zum Fräsradgetriebe (14), sodass die Befestigungsmittel (20, 22) einander gegenüberliegen, ohne sich dabei zu berühren, **dadurch gekennzeichnet, dass** das Verfahren folgende zusätzliche Schritte aufweist:
- Verbinden von je einem Zentrierelement (30) mit den Abstandselementen (24),
- Feinausrichten des Fräsrads (12) relativ zu den Abstandselementen (24) mittels der Zentrierelemente (30), wobei sich die Befestigungsmittel (20, 22) nicht berühren, und
- Verschieben des Fräsrads (12) relativ zu den Abstandselementen (24) mittels der Zentrierelemente (30), sodass die Befestigungsmittel (20, 22) miteinander in Eingriff kommen.

2. Verfahren nach Anspruch 1, **dadurch gekennzeichnet, dass** die Abstandselemente (24) und/oder die am Fräsradgetriebe (14) angeordneten Befestigungsmittel (20) senkrecht von der dem Fräsrad (12) zugewandten Außenseite des Fräsradgetriebes (14) abstehen und vorzugsweise auf Umfang verteilt sind.

3. Verfahren nach Anspruch 1 oder 2, **dadurch gekennzeichnet, dass** die Abstandselemente (24) beim Verschieben des Fräsrads (12) früher mit dem Fräsrad (12) in Kontakt kommen als die Befestigungsmittel (20), wobei die Abstandselemente (24) vorzugsweise eine größere Länge aufweisen als die am Fräsradgetriebe (14) angeordneten Befestigungsmittel (20).

4. Verfahren nach einem der vorhergehenden Ansprüche, **dadurch gekennzeichnet, dass** die am Fräsradgetriebe (14) angeordneten Befestigungsmittel (20) Stifte, insbesondere Gewindestifte, und die am Fräsrad (12) angeordneten Befestigungsmittel (22) Bohrungen sind, wobei beim Verschieben des Fräsrads (12) relativ zu den Abstandselementen (24) die Stifte (20) durch die Bohrungen (22) geschoben und vorzugsweise anschließend mittels Sicherungselementen (28), insbesondere Muttern, gesichert werden.

5. Verfahren nach einem der vorhergehenden Ansprüche, **dadurch gekennzeichnet, dass** die Zentrierelemente (30) von der dem Fräsradgetriebe (14) abgewandten Seite des Fräsrads (12) aus mit den Abstandselementen (24) verbunden, insbesondere verschraubt, werden und nach erfolgter Montage des Fräsrads (12) vorzugsweise von den Abstandselementen (24) entfernt werden.

6. Verfahren nach einem der vorhergehenden Ansprüche, **dadurch gekennzeichnet, dass** pro Abstandselement (24) eine Aussparung (25) an einem Befestigungsflansch (18) des Fräsrads (12) ausgebildet ist, wobei beim Verschieben des Fräsrads (12) relativ zu den Abstandselementen (24) letztere in die Aussparungen (25) einfahren und wobei die Abstandselemente (24) nach erfolgter Montage des Fräsrads (12) vorzugsweise am Fräsradgetriebe (14) verbleiben.

7. Verfahren nach Anspruch 6, **dadurch gekennzeichnet, dass** die Zentrierelemente (30) durch die Aussparungen (25) hindurch, vorzugsweise über Gewindestifte (26), mit den Abstandselementen (24) verbunden werden, wobei die Zentrierelemente (30) zur Feinausrichtung und/oder zum Verschieben des Fräsrads (12) in Richtung des Fräsradgetriebes (14) bewegt, insbesondere geschraubt, werden.

8. Verfahren nach Anspruch 7, **dadurch gekennzeichnet, dass** die Zentrierelemente (30) einen konischen Abschnitt (32) aufweisen, welcher vorzugsweise beim Bewegen in Richtung Fräsradgetriebe (14) mit der Aussparung (25) zusammenwirkt und das Fräsrad (12) derart feinausrichtet, dass die Abstandselemente (24) mit den zugeordneten Aussparungen (25) fluchten.

9. Verfahren nach Anspruch 8, **dadurch gekennzeichnet, dass** die Zentrierelemente (30) im Bereich des konischen Abschnitts (32) einen vorzugsweise umlaufenden ersten Anschlag (34) aufweisen, welcher nach der Feinausrichtung am Fräsrad (12) anliegt.

10. Verfahren nach Anspruch 9, **dadurch gekennzeichnet, dass** die ersten Anschläge (34) beim fortgesetzten Bewegen, insbesondere Schrauben, der Zentrierelemente (30) in Richtung Fräsradgetriebe (14) das Fräsrad (12) ebenfalls in Richtung des Fräsradgetriebes (14) drücken, sodass die Abstandselemente (24) in die Aussparungen (25) einfahren.

11. Verfahren nach einem der Ansprüche 8 bis 10, **dadurch gekennzeichnet, dass** die Zentrierelemente (30) über Gewindestifte (26) mit den Abstandselementen (24) verbunden und durch Verschrauben in Richtung der Abstandselemente (24) bewegbar sind und eine durchgängige Gewindebohrung (36) zur Aufnahme der Gewindestifte (26) aufweisen, wobei vorzugsweise die Zentrierelemente (30) an ihren den konischen Abschnitten (32) abgewandten Enden einen zweiten Anschlag (35) aufweisen und nach dem Verschieben des Fräsrads (12) um eine erste Strecke relativ zu den Abstandselementen (24) von den Gewindestiften (26) abgeschraubt und mit dem anderen Ende wieder auf die Gewindestifte (26) geschraubt werden, bis die zweiten Anschläge (35) an das Fräsrad (12) stoßen, sodass bei fortgesetztem Verschrauben das Fräsrad (12) weiter in Richtung Fräsradgetriebe (14) geschoben wird.

12. Verfahren nach Anspruch 11, **dadurch gekennzeichnet, dass** die Zentrierelemente (30) an ihren den konischen Abschnitten (32) abgewandten Enden in die Gewindebohrungen (36) mündende Ausnehmungen (38) aufweisen, wobei nach dem erneuten Aufschrauben auf die Gewindestifte (26) und fortgesetzten Verschieben des Fräsrads (12) in Richtung Fräsradgetriebe (14) die Abstandselemente (24) in die Ausnehmungen (38) einfahren, bis die Befestigungsmittel (20, 22) von Fräsrad (12) und Fräsradgetriebe (14) vollständig miteinander in Eingriff stehen.

13. Verfahren nach einem der vorhergehenden Ansprüche, **gekennzeichnet durch** mindestens zwei Vorzentrierelemente (40), die an der dem Fräsradgetriebe (14) zugewandten Seite des Fräsrads (12) angeordnet sind und jeweils eine abgeschrägte Fläche aufweisen, wobei das Fräsrad (12) beim Heranführen an das Fräsradgetriebe (14) zuerst über die Vorzentrierelemente (40) auf das Fräsradgetriebe (14) geschoben und über die abgeschrägten Flächen der Vorzentrierelemente (40) relativ zum Fräsradgetriebe (14) vorzentriert wird.

## Claims

1. A method of installing a cutting wheel (12) at a cutting wheel transmission (14) of a slurry wall cutter (10), wherein the cutting wheel transmission (14) and the cutting wheel (12) have fastening means (20, 22) for fastening the cutting wheel (12), and wherein at least two spacer elements (24) are arranged at the cutting wheel transmission (14), said method having the steps:
- guiding the cutting wheel (12) to the cutting wheel transmission (14);
- roughly aligning the cutting wheel (12) relative to the cutting wheel transmission (14) so that the fastening means (20, 22) are opposite one another, without contacting one another in so doing;
**characterized in that** the method has the following additional steps:
- connecting one respective centering element (30) to the spacer elements (24);
- finely aligning the cutting wheel (12) relative to the spacer elements (24) by means of the centering elements (30), with the fastening means (20, 22) not contacting one another; and
- displacing the cutting wheel (12) to the spacer elements (24) by means of the centering elements (30) so that the fastening means (20, 22) come into engagement with one another.

2. A method in accordance with claim 1, **characterized in that** the spacer elements (24) and/or the fastening means (20) arranged at the cutting wheel transmission (14) project perpendicular from the outer side of the cutting wheel transmission (14) facing the cutting wheel (12) and are preferably distributed over the periphery.

3. A method in accordance with claim 1 or claim 2, **characterized in that** the spacer elements (24) come into contact with the cutting wheel (12) on the displacement of the cutting wheel (12) earlier than the fastening means (20), with the spacer elements (24) preferably having a greater length than the fastening means (20) arranged at the cutting wheel transmission (14).

4. A method in accordance with one of the preceding claims, **characterized in that** the fastening means (20) arranged at the cutting wheel transmission (14) are pins, in particular threaded pins, and the fastening means (22) arranged at the cutting wheel (12) are bores, with the pins (20) being pushed through the bores (22) on the displacement of the cutting wheel (12) relative to the spacer elements (24) and preferably subsequently being secured by means of securing elements (28), in particular nuts.

5. A method in accordance with one of the preceding claims, **characterized in that** the centering elements (30) are connected, in particular, screwed to the spacer elements (24) from the side of the cutting wheel (12) remote from the cutting wheel transmission (14) and are preferably removed from the spacer elements (24) after the installation of the cutting wheel (12) has taken place.

6. A method in accordance with one of the preceding claims, **characterized in that** one cutout (25) per spacer element (24) is formed at a fastening flange (18) of the cutting wheel (12), with the spacer elements (24) traveling into the cutouts (25) on the displacement of the cutting wheel (12) relative to them and with the spacer elements (24) preferably remaining at the cutting wheel transmission (14) after installation of the cutting wheel (12) has taken place.

7. A method in accordance with claim 6, **characterized in that** the centering elements (30) are connected to the spacer elements (24) through the cutouts (25), preferable via threaded pins (26), with the centering elements (30) being moved, in particular screwed, in the direction of the cutting wheel transmission (14) for the fine alignment and/or the displacement of the cutting wheel (12).

8. A method in accordance with claim 7, **characterized in that** the centering elements (30) have a conical section (32) that preferably cooperates with the cutout (25) on the movement in the direction of the cutting wheel transmission (14) and finely aligns the cutting wheel (12) such that the spacer elements (24) are aligned with the associated cutouts (25).

9. A method in accordance with claim 8, **characterized in that** the centering elements (30) have a preferably peripheral first abutment (34) in the region of the conical section (32), said first abutment (34) contacting the cutting wheel (12) after the fine alignment.

10. A method in accordance with claim 9, **characterized in that** the first abutments (34) likewise urge the cutting wheel (12) in the direction of the cutting wheel transmission (14) on the continued movement, in particular screwing, of the centering elements (30) in the direction of the cutting wheel transmission (14) so that the spacer elements (24) travel into the cutouts (25).

11. A method in accordance with one of the claims 8 to 10, **characterized in that** the centering elements (30) are connected to the spacer elements (24) via threaded pins (26) and are movable in the direction of the spacer elements (24) by screwing and have a continuous threaded bore (36) for receiving the threaded pins (26), with the centering elements (30) preferably having a second abutment (35) at their ends remote from the conical sections (32) and being unscrewed from the threaded pins (26) after the displacement of the cutting wheel (12) by a first distance relative to the spacer elements (24) and being screwed to the threaded pins (26) at the other end again until the second abutments (35) abut the cutting wheel (12) so that the cutting wheel (12) is pushed further in the direction of the cutting wheel transmission (14) on a continued screwing.

12. A method in accordance with claim 11, **characterized in that** the centering elements (30) have recesses (38) opening into the threaded bores (36) at their ends remote from the conical sections (32), with the spacer elements (24) traveling into the recesses (38) until the fastening means (20, 22) of the cutting wheel (12) and the cutting wheel transmission (14) are completely in engagement with one another after the repeated screwing onto the threaded pins (26) and the continued displacement of the cutting wheel (12) in the direction of the cutting wheel transmission (14).

13. A method in accordance with one of the preceding claims, **characterized by** at least two precentering elements (40) that are arranged at the side of the cutting wheel (12) facing the cutting wheel transmission (14) and each have a chamfered surface, with the cutting wheel (12) first being pushed onto the cutting wheel transmission (14) via the precentering elements (40) on the guiding toward the cutting wheel transmission (14) and being precentered relative to the cutting wheel transmission (14) via the chamfered surfaces of the precentering elements (40).

## Revendications

1. Procédé de montage d'une roue de fraisage (12) sur un mécanisme de transmission de roue de fraisage (14) d'une fraise pour parois moulées (10), le mécanisme de transmission de roue de fraisage (14) et la roue de fraisage (12) présentant des moyens de fixation (20, 22) destinés à la fixation de la roue de fraisage (12) et au moins deux éléments d'écartement (24) étant disposés sur le mécanisme de transmission de roue de fraisage (14), comprenant les étapes consistant à :
- approcher la roue de fraisage (12) du mécanisme de transmission de roue de fraisage (14),
- orienter grossièrement la roue de fraisage (12) par rapport au mécanisme de transmission de roue de fraisage (14), de telle sorte que les moyens de fixation (20, 22) sont en face l'un de l'autre sans se toucher,
**caractérisé en ce que** le procédé présente les étapes supplémentaires suivantes consistant à :
- relier un élément de centrage (30) à chaque élément d'écartement (24),
- orienter avec précision la roue de fraisage (12) par rapport aux éléments d'écartement (24) au moyen des éléments de centrage (30), les moyens de fixation (20, 22) ne se touchant pas, et
- déplacer la roue de fraisage (12) par rapport aux éléments d'écartement (24) au moyen des éléments de centrage (30), de telle sorte que les moyens de fixation (20, 22) viennent en prise les uns avec les autres.

2. Procédé selon la revendication 1, **caractérisé en ce que** les éléments d'écartement (24) et/ou les moyens de fixation (20) disposés sur le mécanisme de transmission de roue de fraisage (14) dépassent perpendiculairement du côté extérieur tourné vers la roue de fraisage (12) du mécanisme de transmission de roue de fraisage (14) et sont de préférence répartis sur la périphérie.

3. Procédé selon la revendication 1 ou 2, **caractérisé en ce que**, lors du déplacement de la roue de fraisage (12), les éléments d'écartement (24) viennent en contact avec la roue de fraisage (12) avant les moyens de fixation (20), les éléments d'écartement (24) présentant de préférence une longueur supérieure aux moyens de fixation (20) disposés sur le mécanisme de transmission de roue de fraisage (14).

4. Procédé selon l'une des revendications précédentes, **caractérisé en ce que** les moyens de fixation (20) disposés sur le mécanisme de transmission de roue de fraisage (14) sont des tiges, en particulier des tiges filetées, et les moyens de fixation (22) disposés sur la roue de fraisage (12) sont des trous, les tiges (20) étant poussées à travers les trous (22) lors du déplacement de la roue de fraisage (12) par rapport aux éléments d'écartement (24) et de préférence ensuite bloquées au moyen d'éléments de blocage (28), en particulier des écrous.

5. Procédé selon l'une des revendications précédentes, **caractérisé en ce que** les éléments de centrage (30) sont reliés, en particulier vissés aux éléments d'écartement (24) depuis le côté de la roue de fraisage (12) tourné dans la direction opposée au mécanisme de transmission de roue de fraisage (14), et de préférence retirés des éléments d'écartement (24) une fois le montage de la roue de fraisage (12) effectué.

6. Procédé selon l'une des revendications précédentes, **caractérisé en ce qu'**un évidement (25) est réalisé pour chaque élément d'écartement (24) sur une joue de fixation (18) de la roue de fraisage (12), dans lequel, lors du déplacement de la roue de fraisage (12) par rapport aux éléments d'écartement (24), ces derniers entrent dans les évidements (25) et dans lequel les éléments d'écartement (24) demeurent de préférence sur le mécanisme de transmission de roue de fraisage (14) une fois le montage de la roue de fraisage (12) effectué.

7. Procédé selon la revendication 6, **caractérisé en ce que** les éléments de centrage (30) sont reliés, à travers les évidements (25), aux éléments d'écartement (24) de préférence par le biais de tiges filetées (26), les éléments de centrage (30) étant déplacés, en particulier vissés, pour l'orientation précise et/ou pour le déplacement de la roue de fraisage (12) en direction du mécanisme de transmission de roue de fraisage (14).

8. Procédé selon la revendication 7, **caractérisé en ce que** les éléments de centrage (30) présentent une partie conique (32), qui coopère de préférence avec l'évidement (25) lors du déplacement en direction du mécanisme de transmission de roue de fraisage (14) et oriente avec précision la roue de fraisage (12) de telle manière que les éléments d'écartement (24) sont alignés avec les évidements (25) associés.

9. Procédé selon la revendication 8, **caractérisé en ce que** les éléments de centrage (30) présentent, dans la zone de la partie conique (32), une première butée (34) de préférence périphérique, qui s'appuie contre la roue de fraisage (12) après l'orientation précise.

10. Procédé selon la revendication 9, **caractérisé en ce que**, lors de la poursuite du déplacement, en particulier du vissage, des éléments de centrage (30) en direction du mécanisme de transmission de roue de fraisage (14), les premières butées (34) poussent la roue de fraisage (12) également en direction du mécanisme de transmission de roue de fraisage (14), de telle sorte que les éléments d'écartement (24) entrent dans les évidements (25).

11. Procédé selon l'une des revendications 8 à 10, **caractérisé en ce que** les éléments de centrage (30) sont reliés aux éléments d'écartement (24) par le biais de tiges filetées (26) et peuvent être déplacés en direction des éléments d'écartement (24) par vissage et présentent un trou taraudé (36) traversant destiné à recevoir les tiges filetées (26), les éléments de centrage (30) présentant de préférence, sur leurs extrémités opposées aux parties coniques (32), une seconde butée (35) et étant, après le déplacement de la roue de fraisage (12) sur une première distance par rapport aux éléments d'écartement (24), dévissés des tiges filetées (26) et revissés avec l'autre extrémité sur les tiges filetées (26) jusqu'à ce que les secondes butées (35) butent contre la roue de fraisage (12), de telle sorte que, lors de la poursuite du vissage, la roue de fraisage (12) est poussée davantage en direction du mécanisme de transmission de roue de fraisage (14).

12. Procédé selon la revendication 11, **caractérisé en ce que** les éléments de centrage (30) présentent, sur leurs extrémités opposées aux parties coniques (32), des creux (38) débouchant dans les trous taraudés (36), dans lequel, après le nouveau vissage sur les tiges filetées (26) et la poursuite du déplacement de la roue de fraisage (12) en direction du mécanisme de transmission de roue de fraisage (14), les éléments d'écartement (24) entrent dans les creux (38) jusqu'à ce que les moyens de fixation (20, 22) de la roue de fraisage (12) et du mécanisme de transmission de roue de fraisage (14) soient complètement en prise les uns avec les autres.

13. Procédé selon l'une des revendications précédentes, **caractérisé par** au moins deux éléments de précentrage (40), qui sont disposés sur le côté de la roue de fraisage (12) tourné vers le mécanisme de transmission de roue de fraisage (14) et présentent respectivement une surface biseautée, la roue de fraisage (12) étant, lors du rapprochement avec le mécanisme de transmission de roue de freinage (14), d'abord poussée sur le mécanisme de transmission de roue de fraisage (14) par le biais des éléments de précentrage (40) et précentrée par rapport au mécanisme de transmission de roue de fraisage (14) par le biais des surfaces biseautées des éléments de précentrage (40).
